# EUROPEAN PATENT SPECIFICATION

(11) **EP 1 023 134 B1**
(45) Date of publication and mention of the grant of the patent: **11.12.2002**
(21) Application number: 98948045.4
(22) Date of filing: 08.10.1998
(51) Int. Cl.: B23C 5/24

(54) **MILLING TOOL**
FRÄSER
FRAISE DE RAINURAGE

(30) Priority: 15.10.1997 SE 9703747
(43) Date of publication of application: 02.08.2000
(73) Proprietor: SANDVIK AKTIEBOLAG, 811 81 Sandviken (SE)
(72) Inventor: QVARTH, Ingemar, S-811 91 Valbo (SE); ENQUIST, Lars-Erik, S-811 32 Sandviken (SE)
(86) International application number: SE9801810
(87) International publication number: WO99019104

(56) References cited:
- US-A- 2 037 642
- US-A- 2 501 293
- US-A- 3 214 825
- US-A- 3 501 822

## Description

### Technical Field of the Invention

The present invention relates to a milling tool comprising a supporting body being rotatable around a central geometric axis, said supporting body having an endless circumferential surface which extends between opposite end surfaces and is equipped with a number of detachable cutting inserts that are directly or indirectly connected with the supporting body by means of both a means of fastening and a pair of serrated surfaces that in a known way consist of oblong, straight and parallel ridges separated by similar grooves, a first one of said serrated surfaces being located at an inner side of the cutting insert and a second being directly or indirectly associated with the supporting body. The cutting insert, has two cutting edges extending relative to each other at a given setting angle, one of said cutting edges being located in an imaginary plane perpendicular to the axis of rotation, and that the parallel ridges and the grooves of said pairs of serrated surfaces have an inclined extension relative to the plane that is perpendicular to the axis of rotation, more precisely at an angle that constitutes half the setting angle between the cutting edges.

### Prior Art

Milling tools of the type mentioned above are previously known from e.g. SE-A-9301399-3, US-A-2 037 642, US-A-3 214 825 and US-A-3 501 822. In connection with these previously known milling tools the means for adjustment of the cutting elements in precise working positions are relatively complicated: This means that the adjusting operation in connection with the positioning of the cutting inserts is time-consuming.

### Objects and Features of the Invention

The present invention aims at overcoming the shortages mentioned above in connection with previously known milling tools and creating an improved milling tool. Thus, a primary object of the invention is to create a milling tool whose cutting elements may be fine-adjusted in a simple, precise and time-saving way.

At least the primary object is achieved by means of the features defined in the characterising portion of claim 1. Preferred embodiments of the invention are further defined in the dependent claims.

### Further Elucidation of Prior Art

The above-mentioned US-A-2 037 642 describes a milling tool that uses clamping wedges for fixing of necessary cutting inserts, more precisely by having the clamping wedge and the cutting insert inserted together into and wedged up in radial recesses in the frame of the tool. In other words any screw coupling for fixing of the cutting inserts to the supporting body is missing. The serrations that are present in connection with the known design are provided between the cutting insert and the clamping wedge. Since the cutting inserts are wedged up no precise adjustment, of the type realised by the present invention, is achieved in practice.

US-A-2 501 293 describes a milling tool having a cutting insert that by means of a rotatable clamping element is attachable to a cassette that in turn is fixed against the frame of the tool by means of a combination of screw coupling and serrated surfaces. More precisely, along a side of the cassette a serrated surface is provided, the ridges and grooves respectively of said serrated surface being transverse relative to the direction of adjustment of the cassette, said screw coupling including a screw provided in an oblong hole in the cassette. In this case the cutting insert itself is attached to the cassette that in its turn is adjustable relative to the frame, said cutting insert being void of any serrations. The adjustment of the cassette is effected in steps, i.e. in such a way that after removing of the clamping screw the cassette is displaced sidewards a distance that is at least equally large as the width of the serrated grooves. Accordingly, no fine adjustment of the cassette, as realised by the invention, is possible in connection with the known tool.

### Brief Description of the Enclosed Drawings

In the drawings:
- Figure 1: is a perspective view of a milling tool in accordance with the invention, the cutting inserts being applied to special cassettes, said tool being disclosed with all the cassettes, except two, removed from the supporting body,
- Figure 2: is an exploded perspective view illustrating a portion of the supporting body and a cassette and a cutting insert being detached from the supporting body,
- Figure 3: is a partial perspective view illustrating how the cutting inserts are adjusted relative to an adherent cassette,
- Figure 4: is a partial perspective view showing a detail of the cassette,
- Figure 5: is a perspective view of a milling tool according to a further embodiment of the invention.

Before the embodiments disclosed in the drawings are described in more detail, it should be pointed out that it should be possible to adjust all of the cutting inserts of a milling tool into very precise working positions. In practice it is the question of tolerances in the magnitude of 1/100 mm or less. Regarding such milling tools as corner milling cutters and facemilling cutters, it is vital that the edges of all of the cutting inserts during work are fine-adjusted not only in one single plane perpendicular to the axis of rotation of the supporting body, but also at an exactly defined radial distance from the axis of rotation. If the cutting inserts of an individual cutting insert are maladjusted relative to the edges of the rest of the cutting inserts so called warps arise, the consequence being that the maladjusted cutting insert and/or adjacent cutting inserts are subjected to an extraordinary large load.

As will be apparent from the description below the present invention uses means that enables a quick and simple fine adjustment of the cutting inserts in both the axial and the radial directions.

### Detailed Description of Practical Embodiments of the Invention

In the embodiments exemplified in the drawings and described below, the individual cutting insert is mounted on a special cassette that in turn is mounted on the supporting body or the milling cutter head. However, the invention is applicable also in the case when the cutting insert is mounted directly upon the supporting body, i.e. without any intermediate cassette.

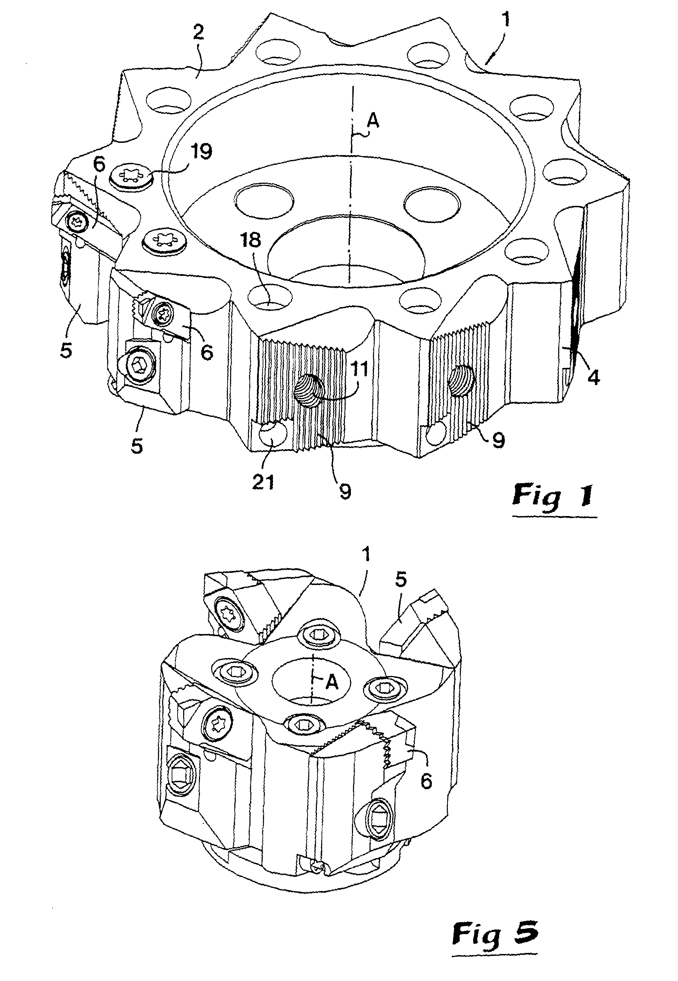

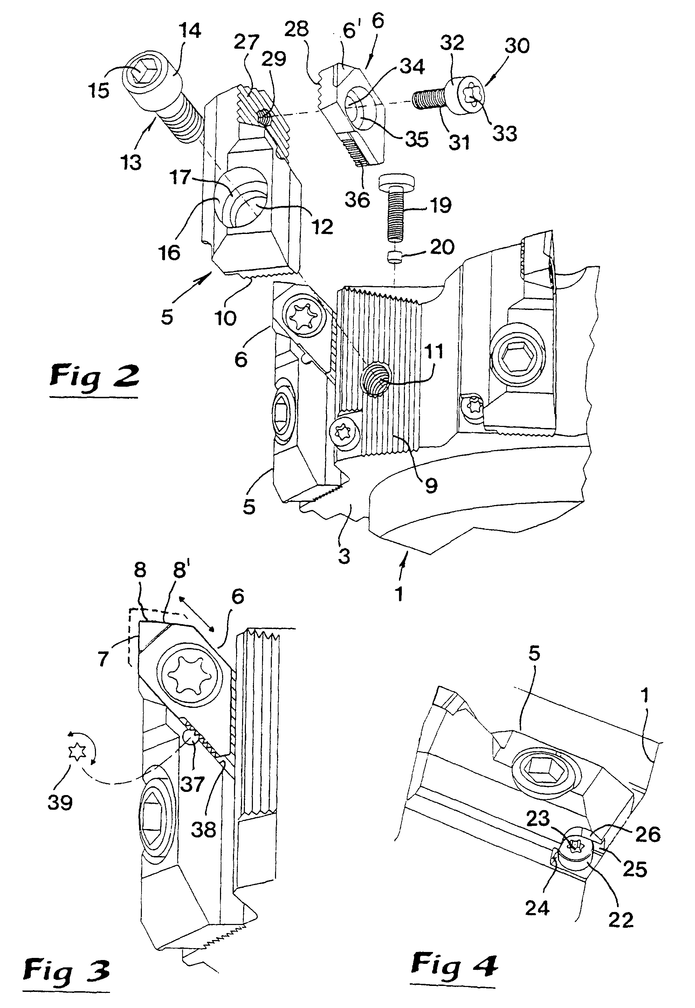

The milling tool illustrated in figures 1-4 comprises a supporting body 1 that is rotatable around a central geometrical axis A, said supporting body 1 having a cylindric basic shape (said supporting body often also being designated milling cutter head by persons skilled in the art). Between opposite, planar end surfaces 2, 3 (see both figures 1 and 2) there is thus an endless, circumferential surface that is designated by 4, said surface indeed not constituting a cylindric or smooth surface, but having the character of an envelope surface. Upon said envelope surface or circumferential surface 4 several cassettes are provided, said cassettes generally being designated by 5. Each cassette 5 supports in turn a cutting insert generally designated by 6. The tool according to the example constitutes a corner cutter, each cutting insert 6 including two cutting edges 7, 8 extending at an angle relative to each other. The edge 7 extends parallel to the axis of rotation A of the supporting body and the edge 8 extends perpendicular thereto. In practice the edge 7 constitutes a major cutting edge that performs the actual material machining of the workpiece, while the edge 8 constitutes a minor cutting edge for the purpose of guaranteeing that the exposed surface of the material is flat and smooth. As regards the minor cutting edge 8 it should be pointed out that said edge is short (in practice it is called a wiper flat) and extends exactly perpendicular to the major cutting edge 7, while a portion 8', extending inside of the edge 7, forms a somewhat inclined clearance portion. However, for scale reasons it is not possible to clearly separate the wiper flat 8 from the clearance portion 8'.

So far described the disclosed milling tool is in all essentials previously known.

The individual cassette 5 is connectable with the supporting body via a pair of cooperating, serrated surfaces 9, 10, a first one of said surfaces being provided at the circumferential surface of the supporting body and the second one at an inner side of the cassette. In a previously known way each serrated surface or serration consists of several oblong, axially oriented and parallel ridges that are separated by intermediate grooves, said ridges of one serration engaging the grooves of the other serration. The serrated surface 9 should extend along a major portion of the axial extension of the supporting body (i.e. the entire distance between opposite planar surfaces 2, 3) and have a width or tangential extension that corresponds to the width of the cassette 5. Simultaneously the serration 10 at the inner side of the cassette should extend along both the entire length as well as the entire width of the cassette.

For each cassette a threaded hole 11 is provided in the supporting body 1, said threaded hole 11 opening in the serrated surface 9. Further, in the cassette 5 a through-going hole 12 is recessed for a solid clamping screw 13 that is allowed to be tightened in the threaded hole 11. In the embodiment a screw is used that apart from a threaded shaft includes a head 14 having a recessed grip 15 for an Allen key. The hole 12 has on one hand a narrow inner section through which the shaft of the screw is allowed to pass, and on the other hand a wider outer section that provides a recess 16 adapted to accomodate the head 14 of the screw. The bottom 17 provides an abutment surface for the head of the screw to be tightened against. The hole 12 has an oblong shape in order to allow the cassette, as long as the screw is not finally tightened, to be displaced to some degree relative to the screw in the axial direction of the supporting body.

Among persons skilled in the art it is well known that components being detachably mounted upon a rotatable supporting body constitute a latent security risk in the respect that in connection with unfortunate circumstances said components may loosen from the supporting body and be thrown away at high power if the supporting body is driven at high speed of rotation. Although it is sufficient to tighten the clamping screw 13 by a predetermined torque the further measure has been taken, in connection with the milling tool according to the invention, to provide a securing of the clamping screw against centrifugal forces. Thus for each cassette and clamping screw a secondary, threaded hole 18 is formed in the supporting body 1. This secondary hole opens on one hand in the planar end surface 2 and on the other hand in the primary hole 11 of the clamping screw 13. In the secondary hole may be inserted on one hand an auxiliary screw 19, said screw being accessible from the outside, and on the other hand a press body 20 that by tightening of the auxiliary screw in the hole 18 is urged against the threaded shaft of the clamping screw 13. In practice the press body 20 is preferably made of copper or another, in relation to steel, soft material that will not damage the thread of the clamping screw. Since the auxiliary screw 19 is not subjected to any centrifugal forces said auxiliary screw will, after tightening, guarantee a satisfactory securing of the clamping screw 13, even if said screw is subjected to high centrifugal forces.

In accordance with a preferred embodiment of the invention a special mechanism is provided in order to facilitate axial fine adjustment of the cassette 5 relative to the supporting body 1, said mechanism may be realised in different ways but is in the embodiment in the shape of a screw having on one hand a threaded shaft (not visible), that may be engaged in a threaded hole 21 of the supporting body and on the other hand a head 22 having an outwards facing grip 23 for a multi-lobed key. It is characteristic of this screw that the envelope surface of the head is asymmetric in relation to the centre axis of the shaft. For instance, the envelope surface may be cylindrical and the head is generally eccentric relative to the shaft. The envelope surface may also have oval shape. As is evident from figure 4 the envelope surface of the head of the screw is located in contact with a transverse abutment surface 24 of the cassette 5. When the screw is subjected to a turning movement said screw will be able to displace the cassette by small or fine axial movements.

A second surface 25 extends at an angle to the abutment surface 24 that together with said second surface 25 define a corner recess in the cassette. In the area of this corner recess the cassette has a projecting flange portion 26 that partly covers the circumferential portion of the head 22 of the screw. By the presence of this flange portion 26 the screw is given a securing against centrifugal forces. In other words said screw may not be thrown away from the milling tool even if said tool is rotated at high speed.

In the embodiment the cutting insert 6 consists of a steel body having an integrated smaller means 6' of a material having extraordinary high hardness and high wear resistance, e.g. a material that wholly or partly consists of diamond or cubic boron nitride. The above-mentioned cutting edges 7, 8 are provided upon said means 6' constituting the actual edge of the cutting insert.

The cutting insert 6 is connectable with the cassette by means of a second pair of serrated surfaces 27, 28 of which a first one 28 is provided at an inner side of the cutting insert 6, while the other one 27 is provided at a free end of the cassette. In conformity with the above-mentioned serrated surfaces 9, 10, said serrated surfaces 27, 28 consist of oblong ridges separated by grooves. The serrated surface 28 preferably extends along the entire inner side of the cutting insert 6, said serrated surface 27 having a size that essentially corresponds to the size of the serrated surface 28. According to the embodiment a threaded hole 29 of a clamping screw 30 opens in the serrated surface 27, said clamping screw 30 being intended to secure the cutting insert to the cassette. Apart from a threaded shaft 31 said screw has a head 32 having an outwards facing grip 33 for a suitable key. In the cutting insert 6 a through hole 34 is recessed, which, like the hole 12, is of oblong shape in order to enable displacement of the cutting insert relative to the screw. Also in this case the hole has a recess for the head of the screw. Said head may be tightened against an annular abutment surface 35 at the bottom of the recess.

As is evident from figures 2 and 3 the cutting insert 6, along one of its longitudinal sides, has a set of teeth or a serration 36 that in a mounted position of the cutting insert is facing a partially circular recess 37 in a wall surface 38, that defines a seat for the cutting insert 6. As is indicated at 39 a multi-lobed key may be introduced in the recess 37 in order to engage the set of teeth 36. It is obvious that the cutting insert is displaceable to and fro relative to the cassette by turning of this key.

Characteristic of the invention is that the ridges and grooves of the first pair of serrated surfaces 27, 28 are inclined in relation to the serrated surfaces 9, 10 and thus also in relation to an imaginary plane that extends perpendicular to the axis of rotation A. More precisely, the serrated surfaces are inclined relative to said plane at an angle that constitutes half of the angle between the cutting edges 7, 8. In order words the inclination of the serrated surfaces corresponds to a bisector angle between the cutting edges 7, 8. If the angle between the edges 7, 8 is 90°, as exemplified in the drawings, the serrated surfaces should accordingly be inclined at an angle of 45° relative to said plane. If the angle between the edges is for instance 120° the serrated surfaces should extend at an angle of 60° relative to said plane.

The fine adjustment of each one of the cutting inserts 6 of the milling tool is effected in the following way: After fastening of the cassette and clamping of the cutting inserts upon the supporting body, the two screws 13, 30 are initially slightly tightened in the respective threaded hole. In a first step the cutting inserts are adjusted in radial direction. This is effected by having the cutting insert 6 displaced relative to the adherent cassette by means of the key 39. More precisely, the cutting inserts are displaced either outwards or inwards at an angle of 45° relative to the longitudinal direction of the cassette. When all of the cutting inserts have been adjusted and calibrated, i.e. they are positioned (within a tolerance area of e.g. 0,01 mm) with the cutting edge 7 exactly at the desired radial distance from the axis of rotation of the supporting body, the screw 30 is finally tightened. At this stage, when the clamping screw 13 of the cassette still is only slightly tightened, the cutting insert may not be displaced in radial direction relative to the supporting body. In the next step the cutting insert is adjusted also in the axial direction. This is effected by means of the head 22 of the screw that upon turning enables axial displacement of the cassette by extremely fine movements. When the cassette has reached the exact desired axial position also the clamping screw 13 is finally tightened. In a final step the auxiliary screw 19 is, together with the press body 20, introduced into the secondary hole 18 in order to secure the clamping screw against centrifugal forces.

A basic advantage of the milling tool according to the present invention is that the double sets of serrated surfaces, that extend at an angle to each other that corresponds to the bisector angle of the cutting edges (e.g. 45°, when the setting angle is 90°), allow a simple and time-saving fine adjustment of the cutting inserts of the tool in both the axial and the radial directions.

In figure 5 an embodiment is illustrated that in principle differs from the embodiment according to figures 1-4 in such a way that the serrated surface 9 - and thus the cassette 5 - extends radially relative to the axis of rotation of the supporting body.

As pointed out initially the invention is also applicable without using the above-mentioned cassettes. It is thus possible to provide the serrated surface 27 directly upon the supporting body 1, said serrated surface 27 being intended to cooperate with the serrated surface 28 of the cutting insert. More precisely, the serrated surface of the supporting body is designed to have its grooves to extend at an angle to the above-mentioned plane that constitutes half of the setting angle of the cutting edges. For instance, if the setting angle is 90° the serrated surface of the supporting body is inclined at an angle of 45° in an arbitrary plane that extends perpendicular to the axis of rotation. If the two cooperating serrated surfaces are manufactured with a sufficiently accurate precision then the cutting inserts may be fine-adjusted both in radial and in axial direction by means of a simple displacement movement of the cutting inserts in direction of the grooves of the serrated surfaces. In other words radial and axial fine adjustment of each individual insert is carried out by one single adjusting operation.

### Feasible Modifications of the Invention

The invention is not solely limited to the embodiments described and disclosed in the drawings. It is thus possible to effect displacement of the cutting inserts relative to the fixed serrated surface (on the cassette or directly on the supporting body) in another way than by the aid of an oblong hole and a screw that is secured axially immovable in the cassette (or the supporting body). It is thus possible to use a screw having on one hand a threaded shaft that may be tightened in a conventionally threaded hole in the cutting insert and on the other hand a head accomodated in an inner cavity in the supporting body, a hole extending out of the inner cavity being oblong in order to allow the screw, and consequently the cutting insert, to move along the fixed serrated surface. Also, the clamping screw 30 of the cutting insert may be secured against centrifugal forces, e.g. in the same way as the clamping screw 13 of the cassette.

## Claims

1. Milling tool comprising a supporting body (1) being rotatable around a central geometric axis (A), said supporting body (1) having an endless circumferential surface (4) which extends between opposite end surfaces (2, 3), and is equipped with a number of detachable cutting inserts (6) that are directly or indirectly connected with the supporting body (1) by means of both a means of fastening and a pair of serrated surfaces (27, 28), that in a known way consist of oblong, straight and parallel ridges separated by similar grooves, a first one (28) of said serrated surfaces being located at an inner side of the cutting insert and a second (27) being directly or indirectly associated with the supporting body, the cutting insert (6) having two cutting edges (7, 8) extending relative to each other at a given setting angle, one of said cutting edges (8) being located in an imaginary plane perpendicular to the axis (A) of rotation, and that the parallel ridges and the grooves of said pairs of serrated surfaces (27, 28) have an inclined extension relative to the plane that is perpendicular to the axis of rotation, more precisely at an angle that constitutes half the setting angle between the cutting edges **characterized in that** said means of fastening comprises a clamping screw (30) that is insertable in a first hole (29), opening in said second serrated surface, and in a second hole (34) in the cutting insert.

2. Milling tool according to claim 1, **characterized in that** said clamping screw (30) has both a head (32) intended to press against an abutment surface (35) in connection with a through-going second hole (34) in the cutting insert and a threaded shaft (31) intended to be tightened in the first hole (29) that for this purpose is threaded, said hole (34) in the cutting insert being oblong in order to admit displacement of the cutting insert relative to the second serrated surface(27).

3. Milling tool according to claim 2, **characterized in that** the abutment surface (35) constitutes the bottom of a recess provided in the exterior of the cutting insert, said recess being adapted to accomodate the head (32) of the screw.

4. Milling tool according to any one of the preceding claims, **characterized in that** the cutting insert is provided with a set of teeth (36) for fine adjustment of the cutting insert (6) relative to the second serrated surface (27), more precisely by cooperation with a key (39).

5. Milling tool according to any one of the preceding claims, **characterized in that** the individual cutting insert (6) is mounted on a cassette (5) that in turn is connected with the supporting body (1), more precisely via a second pair of serrated surfaces (9, 10) that in conformity with the first-mentioned serrated surfaces consist of oblong, parallel ridges separated by grooves, a first one (9) of said serrated surfaces being located at the circumferential surface (4) of the supporting body (1), while the other serrated surface (10) is provided at an inner side of the cassette (5), the last-mentioned surface (10) extending at an angle, e.g. perpendicular, to the second serrated surface (27) of said first pair of serrated surfaces (27, 28).

## Patentansprüche

1. Fräswerkzeug, das einen Tragkörper (1) aufweist, der um eine zentrale geometrische Achse (A) drehbar ist, wobei der Tragkörper (1) eine kontinuierliche Umfangsfläche (4) hat, die zwischen gegenüberliegenden Endflächen (2, 3) verläuft, und mit einer Anzahl von abnehmbaren Schneideinsätzen (6) ausgestattet ist, die direkt oder indirekt mit dem Tragkörper (1) mittels sowohl einer Befestigungsvorrichtung als auch einem Paar von gezahnten Flächen (27, 28) verbunden sind, die in einer bekannten Art und Weise aus länglichen, geraden und parallelen Stegen bzw. Rippen, die durch ähnliche Rillen bzw. Nuten voneinander getrennt sind, bestehen, wobei eine erste Fläche (28) der verzahnten Flächen an einer innenliegenden Seite des Schneideinsatzes lokalisiert ist und eine zweite Fläche (27) direkt oder indirekt dem Tragkörper zugeordnet ist, wobei der Schneideinsatz (6) zwei Schneidkanten (7, 8) hat, die relativ zueinander mit einem gegebenen Einstellwinkel verlaufen, wobei eine der Schneidkanten (8) in einer imaginären Ebene senkrecht zu der Rotationsachse (A) lokalisiert ist und wobei die parallelen Rippen und Nuten des besagten Paares von verzahnten Flächen (27, 28) eine relativ zu der Ebene, die senkrecht auf der Drehachse steht, geneigte Ausdehnung haben oder genauer gesagt einen Winkel einschließen, der den halben Einstellwinkel zwischen den Schneidkanten bildet, **dadurch gekennzeichnet, daß** die Befestigungsvorrichtung eine Klemmschraube (30) aufweist, die in ein erstes Loch (29), das sich in der zweiten verzahnten Fläche öffnet, und in ein zweites Loch (34) in dem Schneideinsatz einsetzbar ist.

2. Fräswerkzeug nach Anspruch 1, **dadurch gekennzeichnet, daß** die Klemmschraube (30) sowohl einen Kopf (32), der dafür vorgesehen ist, gegen eine Widerlagerfläche (35), die in Verbindung mit einem zweiten Durchgangsloch (34) in dem Schneideinsatz steht, zu pressen, als auch einen Schaft (31) mit Gewinde hat, der dafür vorgesehen ist, in dem ersten Loch (29) festgezogen zu werden, das aus diesem Grund ein Gewinde aufweist, wobei das Loch (34) in dem Schneideinsatz länglich ist, um die Verschiebung des Schneideinsatzes relativ zu der zweiten verzahnten Fläche (27) zuzulassen.

3. Fräswerkzeug nach Anspruch 2, **dadurch gekennzeichnet, daß** die Widerlagerfläche (35) den Boden einer Vertiefung bildet, die an der Außenseite des Schneideinsatzes zur Verfügung gestellt wird, wobei die Vertiefung derart angepaßt ist, daß sie den Kopf (32) der Schraube aufnimmt.

4. Fräswerkzeug nach einem der vorherigen Ansprüche, **dadurch gekennzeichnet, daß** der Schneideinsatz mit einem Satz von Zähnen (36) für die Feineinstellung des Schneideinsatzes (6) relativ zu der zweiten verzahnten Fläche (27) oder genauer gesagt durch Kooperation mit einem Schlüssel (39) ausgestattet ist.

5. Fräswerkzeug nach einem der vorherigen Ansprüche, **dadurch gekennzeichnet, daß** der einzelne Schneideinsatz (6) auf einer Kassette (5) montiert ist, die wiederum mit dem Tragkörper (1) verbunden ist und genauer gesagt über ein zweites Paar von verzahnten Flächen (9, 10), das in Konformität mit den zuerst erwähnten verzahnten Flächen aus länglichen, parallelen Rippen bzw. Stegen besteht, die durch Nuten bzw. Rillen voneinander getrennt sind, wobei eine erste Fläche (9) der verzahnten Flächen an der Umfangsfläche (4) des Tragkörpers (1) angeordnet ist, während die andere verzahnte Fläche (10) an einer innenliegenden Seite der Kassette (5) bereitgestellt wird, wobei die zuletzt genannte Fläche (10) gegenüber der zweiten verzahnten Fläche (27) des ersten Paares von verzahnten Flächen (27, 28) gewinkelt, z.B. senkrecht, verläuft.

## Revendications

1. Outil de fraisage comprenant un corps de support (1) qui peut être entraîné en rotation autour d'un axe géométrique central (A), ledit corps de support (1) comportant une surface circonférentielle sans fin (4) qui s'étend entre des surfaces d'extrémité opposées (2, 3), et est équipée d'un certain nombre de plaquettes de coupe amovibles (6) qui sont directement ou indirectement reliées au corps de support (1) au moyen à la fois d'un moyen de fixation et d'une paire de surfaces dentelées (27, 28), qui d'une façon connue sont constituées de nervures oblongues, droites et parallèles séparées par des rainures similaires, une première (28) desdites surfaces dentelées étant située au niveau d'un côté intérieur de la plaquette de coupe et une seconde (27) étant directement ou indirectement associée au corps de support, la plaquette de coupe (6) comportant deux arêtes de coupe (7, 8) s'étendant l'une par rapport à l'autre selon un angle d'ajustement donné, l'une desdites arêtes de coupe (8) étant située dans un plan imaginaire perpendiculaire à l'axe (A) de rotation, et les nervures et les rainures parallèles desdites paires de surfaces dentelées (27, 28) présentent un prolongement incliné par rapport au plan qui est perpendiculaire à l'axe de rotation, plus précisément à un angle qui représente la moitié de l'angle d'ajustement entre les arêtes de coupe, **caractérisé en ce que** ledit moyen de fixation comprend une vis de serrage (30) qui peut être insérée dans un premier trou (29), s'ouvrant dans ladite seconde surface dentelée, et dans un second trou (34) dans la plaquette de coupe.

2. Outil de fraisage selon la revendication 1, **caractérisé en ce que** ladite vis de serrage (30) présente à la fois une tête (32) prévue pour presser contre une surface de butée (35) relative à un second trou traversant (34) dans la plaquette de coupe et une tige filetée (31) prévue pour être serrée dans le premier trou (29) qui est taraudé à cette fin, ledit trou (34) dans la plaquette de coupe étant oblong de manière à tolérer le déplacement de la plaquette de coupe par rapport à la seconde surface dentelée (27).

3. Outil de fraisage selon la revendication 2, **caractérisé en ce que** la surface de butée (35) constitue la partie inférieure d'un évidement prévu à l'extérieur de la plaquette de coupe, ledit évidement étant conçu pour recevoir la tête (32) de la vis.

4. Outil de fraisage selon l'une quelconque des revendications précédentes, **caractérisé en ce que** la plaquette de coupe est munie d'un ensemble de dents (36) en vue d'un ajustement fin de la plaquette de coupe (6) par rapport à la seconde surface dentelée (27), plus précisément par l'intermédiaire d'une clé (39).

5. Outil de fraisage selon l'une quelconque des revendications précédentes, **caractérisé en ce que** la plaquette de coupe individuelle (6) est montée sur une cassette (5) qui à son tour est reliée au corps de support (1), plus précisément par l'intermédiaire d'une seconde paire de surfaces dentelées (9, 10) qui, en conformité avec les surfaces dentelées mentionnées tout d'abord, sont constituées de nervures oblongues, parallèles séparées par des rainures, une première (9) desdites surfaces dentelées étant située au niveau de la surface circonférentielle (4) du corps de support (1), tandis que l'autre surface dentelée (10) est disposée au niveau d'un côté intérieur de la cassette (5), la surface mentionnée en dernier (10) s'étendant suivant un angle, par exemple perpendiculaire, par rapport à la seconde surface dentelée (27) de ladite première paire de surfaces dentelées (27, 28).
